Europäisches Patentamt

European Patent Office

Office européen des brevets

(11) Numéro de publication: **0 274 297 B1**

## FASCICULE DE BREVET EUROPEEN

(45) Date de publication de fascicule du brevet:
**02.01.92**

(21) Numéro de dépôt: **87402700.6**

(22) Date de dépôt: **30.11.87**

(51) Int. Cl.⁵: **G21C 3/06**

(54) **Assemblage combustible nucléaire à gaines revêtues et procédé de revêtement de telles gaines.**

(30) Priorité: **01.12.86 FR 8616735**

(43) Date de publication de la demande:
**13.07.88 Bulletin 88/28**

(45) Mention de la délivrance du brevet:
**02.01.92 Bulletin 92/01**

(84) Etats contractants désignés:
**BE DE ES SE**

(56) Documents cités:
**EP-A- 0 187 928**
**FR-A- 1 185 241**
**FR-A- 1 290 243**
**FR-A- 2 317 372**
**GB-A- 992 677**

(73) Titulaire: **FRAMATOME**
**Tour Fiat 1, Place de la Coupole**
**F-92400 Courbevoie(FR)**

Titulaire: **COMPAGNIE GENERALE DES MATIE-**
**RES NUCLEAIRES (COGEMA)**
**2, rue Paul Dautier B.P. 4**
**F-78141 Vélizy-Villacoublay(FR)**

(72) Inventeur: **Hertz, Dominique**
**23 Chemin de la Pomme**
**F-69160 Tassin(FR)**

(74) Mandataire: **Fort, Jacques et al**
**CABINET PLASSERAUD 84, rue d'Amsterdam**
**F-75009 Paris(FR)**

Rank Xerox (UK) Business Services

## Description

L'invention concerne les assemblages combustibles nucléaires destinés à être utilisés dans les réacteurs refroidis et modérés par circulation d'eau, du type comprenant un faisceau de crayons combustibles munis d'une gaine en alliage à base de zirconium, retenus suivant un réseau régulier par des grilles d'espacement réparties le long des crayons et appartenant à un squelette constituant l'organe de structure de l'assemblage.

Les crayons combustibles comportent un empilement de pastilles frittées d'oxyde d'uranium et/ou de plutonium occupant une partie de la longueur de la gaine, fermée par deux bouchons constitués également à base de zirconium.

Lors du fonctionnement d'un réacteur contenant un assemblage combustible du type ci-dessus défini les gaines des crayons, ainsi dans une moindre mesure que les autres organes en alliage à base de zirconium présentent un phénomène de corrosion. La surface exposée à l'eau se couvre progressivement d'une couche d'oxyde de zirconium $ZrO_2$ provenant de la réaction :

$$Zr + 2H_2O \rightarrow ZrO_2 + 2H_2.$$

Cette réaction a deux conséquences. La présence d'hydrogène dans l'alliage de zirconium provoque la formation d'hydrures dont la teneur doit être limitée si on veut éviter une fragilisation du métal. La présence de la couche de zircone, de faible conductivité thermique, se traduit par une augmentation de la résistance thermique opposée au flux de chaleur fourni par le matériau combustible de sorte que, à température de réfrigérant donnée, la température du combustible et de la partie métallique de la gaine augmente. Le problème est aggravé du fait que la cinétique de formation de $ZrO_2$ augmente rapidement avec la température à l'interface alliage de zirconium-zircone et avec la diffusion des anions oxygène et oxydrile jusqu'à cet interface. Quant à la formation des hydrures, elle dépend principalement de la température du métal et de la diffusion des espèces hydrogénées jusqu'au métal.

On a déjà proposé de protéger les gaines contre l'oxydation par revêtement à l'aide de chrome déposé par évaporation sous vide par voie chimique, par implantation d'ions ou par pulvérisation (FR-A-2 317 372). Les dépôts de chrome obtenus par de tels procédés ne donnent pas des résultats pleinement satisfaisant à tous les points de vue. L'invention vise à fournir un assemblage combustible dont les gaines sont revêtues sur la face externe d'une couche adhérente limitant l'oxydation de façon efficace et ne dégradant pas d'autres propriétés de la gaine. Dans ce but l'invention propose notamment un assemblage combustible du type ci-dessus défini comprenant au moins une fraction de la surface des gaines est recouverte d'une couche de carbone dense et adhérente ayant une épaisseur comprise entre 0,1 $\mu$ et 5 $\mu$, avantageusement d'environ 0,8 $\mu$, de dureté intrinsèque comprise entre 2000 et 9000 Kg/mm². 

L'invention propose également un procédé de réalisation de gaines protégées, suivant lequel on revêt la surface externe des gaines d'une couche dense de carbone amorphe par pulvérisation réactive radiofréquence, pulvérisation ionique, décomposition chimique assistée au plasma froid, faisceau d'ions ou pulvérisation cathodique, jusqu'à obtention d'une épaisseur comprise entre 0,1 $\mu m$ et 5 $\mu m$, chacune de ces techniques pouvant, lors du dépôt, être accompagnée d'un bombardement concomitant. Les ions peuvent être inactifs ou réactifs : ils ne participent pas à la consititution du dépôt mais augmentent l'adhérence de celui-ci.

Avant dépôt, la gaine est avantageusement soumise à un décapage, par exemple par décharge en atmosphère raréfiée pour augmenter l'adhérence du revêtement. Ce dernier peut être réalisé directement sur l'alliage de zirconium où une couche tampon intermédiaire d'amélioration de la stabilité lors des cyclages thermiques peut être interposée. Cette couche tampon doit être en un matériau compatible avec l'utilisation dans un réacteur nucléaire. On peut en particulier envisager l'emploi de carbone d'une autre densité ou autre morphologie ou de carbure, notamment de zirconium ou de silicium.

Comme on l'a indiqué plus haut, la croissance de la couche de zircone est d'autant plus rapide que la température à l'interface est élevée. La formation de zircone est en conséquence plus rapide dans la partie des crayons qui est balayée en dernier par l'eau, dont la température s'accroît de l'entrée à la sortie du coeur. Pour cette raison, on pourra dans certains cas se borner à revêtir une fraction terminale des gaines.

Un revêtement de carbone de même nature que celui prévu pour les gaines peut être appliqué sur d'autres pièces de l'assemblage en alliage à base de zirconium, par exemple sur des parties filetées, notamment pour faciliter leur démontage et limiter le grippage, et sur certaines au moins des grilles, lorsque ces dernières sont en alliage de zirconium.

L'invention sera mieux comprise à la lecture de la description qui suit d'un mode particulier d'exécution donné à titre d'exemple non limitatif. La description se réfère aux dessins qui l'accompagnent dans lesquels

:
- la Figure 1 est un schéma montrant un crayon d'assemblage combustible muni d'une gaine revêtue suivant l'invention ;
- la Figure 2 montre très schématiquement une installation possible de revêtement.

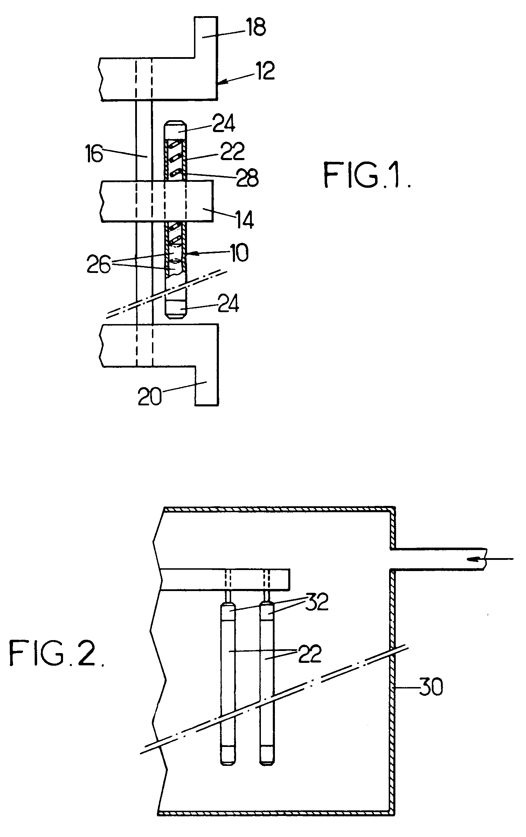

La Figure 1 montre une fraction d'un crayon de combustible 10 appartenant à un assemblage 12 pour réacteur nucléaire à eau sous pression. Le crayon 10 est maintenu en l'un des noeuds d'un réseau régulier, dont d'autres noeuds sont occupés par des crayons similaires, par des grilles 14 réparties à intervalle régulier le long du crayon. Ces grilles appartiennent à un squelette qui comporte également des tubes guides 16 fixés à leurs extrémités à un embout supérieur 18 et un embout inférieur 20.

Chaque crayon 10 est constitué d'une gaine 22 en un alliage à base de zirconium, souvent en l'un des alliages connus sous la dénomination "zircaloy". La gaine est fermée par des bouchons 24, également en "zircaloy" et comprend un empilement de pastilles 26 de matériau combustible nucléaire. En général, ces pastilles sont constituées d'oxyde d'uranium et/ou de plutonium. L'empilement est maintenu par un ressort 28 prenant appui sur le bouchon supérieur 24.

Lorsque l'assemblage 12 est placé dans un réacteur et que ce dernier est en fonctionnement, les fissions dans le combustible provoquent un dégagement de chaleur qui est transmise à l'eau en écoulement ascendant à travers le coeur, à une température qui augmente du bas vers le haut. La surface externe des gaines se recouvre peu à peu d'une couche de zircone dont la cinétique de formation est plus rapide à la partie supérieure de la colonne de pastilles 26 du fait que c'est dans cette zone que l'interface entre zircone et "zircaloy" va être à la température maximale.

Pour ralentir la cinétique d'oxydation, la gaine est revêtue avant utilisation, au moins à sa partie supérieure, d'une couche de carbone que doit être à la fois dense et adhérente.

Le revêtement de carbone peut être réalisé par pulvérisation réactive à radiofréquence dans une atmosphère d'argon et d'un composé hydrogéné (par exemple $CH_4$ et/ou $C_2H_6$) qui donne naissance à une couche de carbone fortement hydrogénée, ayant un rapport atomique C/H d'environ 1/1. D'autres méthodes sont également utilisables. On peut notamment utiliser la pulvérisation ionique sous pression faible (au maximum $1,33 \ 10^{-3}$ mbars), qui a l'avantage de fournir une couche faiblement hydrogénée (ayant un rapport atomique H/C d'environ 5%). On peut également adopter la pulvérisation cathodique, la décomposition chimique sous plasma froid ou l'implantation directe à l'aide d'un faisceau d'ions. Cependant, la pulvérisation cathodique a l'inconvénient de donner une vitesse de croissance de couche faible, difficilement admissible pour une fabrication industrielle. La décomposition chimique doit être assistée par plasma pour pouvoir être réalisée à une température suffisamment basse pour être compatible avec la tenue des gaines. L'adhérence est améliorée par un bombardement avec des ions Ar ou He. Toutes ces techniques permettent d'obtenir un revêtement en carbone adamantin, hydrogéné ou non, de structure amorphe afin d'éviter les courts circuits de diffusion, et d'aspect brillant, ayant de bonnes caractéristiques tribologiques garantissant que le revêtement ne sera pas endommagé lors de l'insertion des crayons 10 dans un assemblage.

Le revêtement peut par exemple être réalisé dans une enceinte 30 à atmosphère contrôlée permettant au cours d'une phase préliminaire, de soumettre les gaines 22, suspendues par des bouchons provisoires 32 à un décapage ionique sous faible pression.

Des essais comparatifs ont été faits pour déterminer la réduction de corrosion obtenue par mise en oeuvre de l'invention.

Au cours de ces essais, des feuillards en "zircaloy 4" polis chimiquement ont été revêtus d'une couche de carbone d'environ 80 $\mu$m. Des échantillons bruts 1, des échantillons polis non revêtus 2 et des échantillons polis revêtus de carbone 3 ayant un aspect adamantin ont été portés en autoclave à 360°C et à 195 bars dans de l'eau contenant 1,5 ppm de lithium et 650 ppm de bore. Les gains en poids des échantillons ont été les suivants (en mg.dm$^{-2}$)

| Echantillons | Gain de poids après | | | |
|---|---|---|---|---|
| | 1 mois | 2 mois | 3 mois | 4 mois |
| 1 | 22,2 | 26,9 | 29,7 | 44,7 |
| 2 | 19,4 | 24,5 | 27,4 | 34,5 |
| 3 | 8,2 | 7,4 | 8,4 | 7,6 |

On voit que la prise de poids de l'échantillon revêtu est faible et reste constante au bout de plusieurs mois, ce qui prouve que le revêtement en carbone est imperméable aux ions responsables de la corrosion.

La comparaison des résultats obtenus au bout de quatre mois montre que les échantillons non revêtus continuent de gagner du poids, et que la corrosion s'accélère.

Par ailleurs, les essais de dureté effectués sur le "zircaloy" ont montré que, sous charge de 10 g, la dureté Knoop est de 1 000 à 1 050 kg.mm$^{-2}$ pour l'échantillon revêtu alors qu'elle est de 400 kg.mm$^{-2}$ pour le zircaloy 2 nu.

La couche de carbone adamantin présente quant à elle une dureté intrinsèque comprise entre 2.000 kg et 9.000 kg/mm$^2$. Cette dureté peut être ajustée en contrôlant lors du dépôt la proportion des liaisons de type diamant par rapport aux liaisons de type graphite.

**Revendications**

1.  Assemblage combustible nucléaire destiné à être utilisé dans un réacteur refroidi et modéré par circulation d'eau, comprenant un faisceau de crayons combustibles (10) munis d'une gaine (22) à base de zirconium, retenus suivant un réseau régulier par des grilles d'espacement (14) réparties le long des crayons et appartenant à un squelette constituant l'organe de structure de l'assemblage, au moins une fraction de la surface extérieure des gaines étant revêtue d'une couche de carbone adamantin, dense et adhérente, ayant une épaisseur comprise entre 0,1 $\mu$m et 5 $\mu$m, avantageusement d'environ 0,8 $\mu$m, de dureté intrinsèque comprise entre 2000 et 9000 kg/mm$^2$.

2.  Assemblage selon la revendication 1, caractérisé en ce que seule une fraction de la surface extérieure, située dans la zone occupée par le combustible à température maximale, est revêtue.

3.  Procédé de protection de gaine de crayon d'assemblage combustible selon la revendication 1, caractérisé en ce qu'on revêt la surface externe des gaines d'une couche de carbone amorphe, hydrogénée ou non, par pulvérisation réactive radiofréquence, par pulvérisation cathodique ou ionique, par décomposition chimique assistée au plasma froid ou par faisceau d'ions jusqu'à obtention d'une épaisseur comprise entre 0,1 $\mu$m et 5 $\mu$m.

4.  Procédé selon la revendication 3, caractérisé en ce que le revêtement des gaines est accompagné d'un bombardement ionique d'augmentation d'adhérence.

**Claims**

1.  Nuclear fuel assembly for use in a reactor cooled and moderated by a water flow, comprising a bundle of fuel rods (10) having a zirconium base sheath (22), retained in a regular pattern by spacing grids (14) distributed along the rods and belonging to a skeleton which constitutes the structural unit of the assembly, at least part of the outer surface of the sheaths being coated with a dense and adhering layer of adamantine carbon having a thickness of from 0.1 $\mu$m and 5 $\mu$m, advantageously about 0.8 $\mu$m, whose intrinsic hardness is comprised between 2000 and 9000 kg/mm$^2$.

2.  Assembly according to claim 1, characterized in that only part of the outer surface, located in a zone where fuel is at a maximum temperature, is coated.

3.  Process for protecting a sheath of a nuclear fuel rod according to claim 1, characterized by coating the outer surface of the sheath with a amorphous carbon layer, hydrogenated or not hydrogenated, by radiofrequency reactive sputtering, by cathodic or ionic sputtering, by cold plasma-assisted chemical decomposition or by an ion beam, until a thickness comprised between 0.1 $\mu$m and 5 $\mu$m is obtained.

4.  Process according to claim 3, characterized in that sheath coating is carried out together with ion bombardment for increasing adhesion.

**Patentansprüche**

1.  Brennelementkassette zur Verwendung in einem wassergekühlten und wassermoderierten Kernreaktor mit einem Bündel Brennelementstäbe (10), die mit einer Schutzhülle (22) auf Zirkoniumbasis umgeben sind und in Form einer regelmäßigen Gitteranordnung mittels Beabstandungsgittern (14) gehalten werden, die entlang der Brennelementstäbe verteilt angeordnet sind und einem Skelett angehören, das das Grundgerüst der Brennelementkassette bildet, wobei mindestens ein Teil der äusseren Oberfläche

4

EP 0 274 297 B1

der Ummantelungen mit einer sehr harten, dichten und haftenden Kohlenstoffschicht versehen ist, die eine Dicke zwischen 0,1 $\mu$m und 5 $\mu$m, vorzugsweise etwa 0,8 $\mu$m und eine intrinsische Härte zwischen 2000 und 9000 kg/mm$^2$ aufweist.

2. Brennelementkassette nach Anspruch 1,
dadurch gekennzeichnet, daß
lediglich ein Teil der äußeren Oberfläche, der in dem Bereich liegt, der von dem Brennstoff bei maximaler Temperatur eingenommen wird, beschichtet ist.

3. Verfahren zum Schutz der Hülle von Brennstäben einer Brennelementkassette nach Anspruch 1,
dadurch gekennzeichnet, daß
die äußere Oberfläche der Hülle mit einer sehr harten, gegebenenfalls wasserstoffangereicherten Kohlenstoffschicht beschichtet ist, die durch reaktive hochfrequente Zerstäubung, durch kathodische oder ionische Zerstäubung oder durch eine mittels eines kalten Plasmas oder eines Ionenstrahls unterstützte chemische Zersetzung erhalten wird, bis eine Dicke zwischen 0,1 $\mu$m und 5 $\mu$m erreicht wird.

4. Verfahren nach Anspruch 3,
dadurch gekennzeichnet, daß
die Beschichtung der Hüllen von einer Ionenbombardierung begleitet wird, zur Erhöhung der Haftfähigkeit der Schicht.

5

FIG.1.

FIG.2.